(19) Europäisches Patentamt
European Patent Office
Office européen des brevets

(11) EP 4 610 337 A1

(12) EUROPEAN PATENT APPLICATION
published in accordance with Art. 153(4) EPC

(43) Date of publication:
**03.09.2025 Bulletin 2025/36**

(21) Application number: **23897638.5**

(22) Date of filing: **22.11.2023**

(51) International Patent Classification (IPC):
***C10M 145/14** (2006.01)* ***C10M 149/04** (2006.01)*
***C10M 149/06** (2006.01)* ***C10N 20/02** (2006.01)*
***C10N 20/04** (2006.01)* ***C10N 30/00** (2006.01)*
***C10N 30/06** (2006.01)* ***C10N 30/08** (2006.01)*
***C10N 40/00** (2006.01)* ***C10N 40/04** (2006.01)*
***C10N 40/06** (2006.01)* ***C10N 40/08** (2006.01)*
***C10N 40/25** (2006.01)*

(52) Cooperative Patent Classification (CPC):
**C10M 145/14; C10M 149/04; C10M 149/06**

(86) International application number:
**PCT/JP2023/041950**

(87) International publication number:
**WO 2024/116990 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 JP 2022191749**

(71) Applicant: **Sanyo Chemical Industries, Ltd.**
**Kyoto-shi, Kyoto 605-0995 (JP)**

(72) Inventors:
- **UENO, Kazushi**
  **Kyoto-shi, Kyoto 605-0995 (JP)**
- **YAMASHITA, Hiroki**
  **Kyoto-shi, Kyoto 605-0995 (JP)**

(74) Representative: **Manitz Finsterwald**
**Patent- und Rechtsanwaltspartnerschaft mbB**
**Martin-Greif-Straße 1**
**80336 München (DE)**

# (54) FRICTION MODIFIER AND LUBRICANT COMPOSITION

(57) The present invention aims to provide a friction modifier having both a friction reducing effect and storage stability, and a lubricating oil composition containing the friction modifier and having a high friction reducing effect and high stability at high temperatures. The present invention relates to a friction modifier containing a copolymer (A) that contains, as essential constituent monomers, a monomer (a) represented by the following formula (1) and a monomer (b) represented by the following formula (2), the monomer (a) among copolymer (A)-constituting monomers having an average value of p per mole of the monomer (a) of 1 to 4, the copolymer (A) having a weight average molecular weight of 5,000 to 38,000, the copolymer (A) containing the monomer (a) in an amount of 10 to 60% by weight based on a total weight of the copolymer (A)-constituting monomers. The formula (1) is as follows:

[Chem. 1]

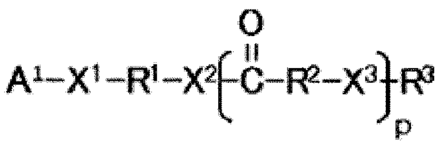

(1)

wherein $A^1$ is a polymerizable group; $-X^1-$, $-X^2-$, and $-X^3-$are each independently a group represented by -O- or -NH-; $R^1$ is a C1-C4 alkylene group; $R^2$ is a C2-C20 alkylene group; $R^3$ is a hydrogen atom; and p is an integer of 1 to 100, where when p

EP 4 610 337 A1

is 2 or more, a plurality of $R^2$'s are the same as or different from each other and a plurality of $X^3$'s are the same as or different from each other. The formula (2) is as follows:

[Chem. 2]

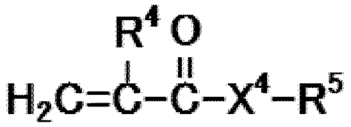

(2)

wherein $R^4$ is a hydrogen atom or a methyl group; $-X^4-$ is a group represented by -O- or -NH-; and $R^5$ is a linear or branched C5-C44 alkyl group.

## Description

TECHNICAL FIELD

The present invention relates to friction modifiers and lubricating oil compositions.

BACKGROUND ART

In recent years, to improve fuel economy, there has been an increasing demand for compact and lightweight vehicle transmissions with higher power transmission efficiency. In vehicle transmission systems, manual transmissions have been replaced by automatic transmissions, and recently, some vehicles have adopted continuously variable transmissions. Electric vehicles equipped with electric motors and batteries such as leadacid batteries, nickel-hydride batteries, lithium-ion batteries, and fuel cells and hybrid vehicles equipped with such batteries in combination with internal combustion engines have been developed. In these vehicles, a transmission oil and an electric motor oil have been used separately.

In recent electric vehicles and hybrid vehicles, replacement of these oils with a single oil and a compact, lightweight design achieved through the integration of the transmission and electric motor into a single unit have been increasingly sought. A new type of oil is required that has the anti-wear properties of a manual transmission oil, automatic transmission oil, or continuously variable transmission oil, as well as the insulating properties and compatibility with copper of an electric motor oil.

To meet the requirements such as anti-wear properties and seizure resistance, friction modifiers are used. In general, friction modifiers such as phosphates, zinc dithiophosphates, and organic sulfur compounds are added to mineral oil base oils or synthetic base oils. However, transmission oils containing such friction modifiers can cause copper corrosion and have insufficient insulating properties, causing issues such as copper wire damage and short-circuiting of electric motors when used as electric motor oils. To overcome such issues, friction modifiers that are compatible with copper and that provide insulation properties and anti-wear properties have become increasingly important for use in electric vehicles and hybrid vehicles.

Examples of friction modifiers that do not deteriorate compatibility with copper and insulating properties include polymeric friction modifiers that do not contain sulfur or phosphorus as a constituent element. Specific examples include copolymers containing $\alpha$-olefins and fumaric acid esters (Patent Literature 1), acrylic acid ester copolymers having hydroxy groups (Patent Literature 2), polyesters containing hydrophilic polymer units and polyolefin units (Patent Literature 3), and methacrylic acid ester copolymers having a block structure containing a polar segment unit and a hydrophobic segment unit (Patent Literature 4). These polymeric friction modifiers however cannot sufficiently reduce friction.

Known friction modifiers capable of solving the above issues include (meth)acrylic acid ester copolymers containing a monomer with a specific structure as an essential constituent monomer (Patent Literatures 5 and 6). These friction modifiers greatly reduce friction but have poor storage stability. Furthermore, lubricating oil compositions containing the friction modifiers above have an issue with the formation of precipitates when used at high temperatures for long periods of time.

CITATION LIST

- Patent Literature

Patent Literature 1: JP 3730660 B2
Patent Literature 2: JP 5822706 B2
Patent Literature 3: JP 5684832 B2
Patent Literature 4: JP 4686444 B2
Patent Literature 5: JP 2022-151618 A
Patent Literature 6: JP 6582021 B2


SUMMARY OF INVENTION

- Technical Problem

The present invention aims to provide a friction modifier having both a friction reducing effect and storage stability,

and a lubricating oil composition containing the friction modifier and having a high friction reducing effect and high stability at high temperatures.

- Solution to Problem

As a result of extensive studies, the present inventors reached the present invention.

Specifically, the present invention relates to a friction modifier containing a copolymer (A) that contains, as essential constituent monomers, a monomer (a) represented by the following formula (1); and a monomer (b) represented by the following formula (2), the monomer (a) among copolymer (A)-constituting monomers having an average value of p per mole of the monomer (a) of 1 to 4, the copolymer (A) having a weight average molecular weight of 5,000 to 38,000, the copolymer (A) containing the monomer (a) in an amount of 10 to 60% by weight based on a total weight of the copolymer (A)-constituting monomers. The present invention also relates to a lubricating oil composition containing the friction modifier and a base oil.

[Chem. 1]

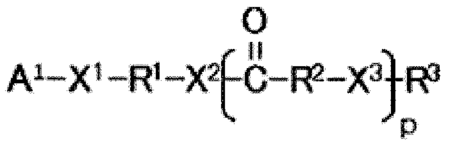

(1)

In the formula (1), $A^1$ is a polymerizable group; $-X^1-$, $-X^2-$, and $-X^3-$ are each independently a group represented by -O- or -NH-; $R^1$ is a C1-C4 alkylene group; $R^2$ is a C2-C20 alkylene group; $R^3$ is a hydrogen atom; and p is an integer of 1 to 100, where when p is 2 or more, a plurality of $R^2$'s are the same as or different from each other and a plurality of $X^3$'s are the same as or different from each other.

[Chem. 2]

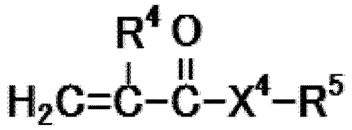

(2)

In the formula (2), $R^4$ is a hydrogen atom or a methyl group; $-X^4-$ is a group represented by -O- or -NH-; and $R^5$ is a linear or branched C5-C44 alkyl group.

- Advantageous Effects of Invention

The friction modifier of the present invention has both a friction reducing effect and storage stability, and the lubricating oil composition containing the friction modifier of the present invention has a high friction reducing effect and excellent stability at high temperatures.

DESCRIPTION OF EMBODIMENTS

<Friction modifier>

The friction modifier of the present invention contains a copolymer (A) that contains, as essential constituent monomers: a monomer (a) represented by the following formula (1); and a monomer (b) represented by the following formula (2), the monomer (a) among copolymer (A)-constituting monomers having an average value of p per mole of the monomer (a) of 1 to 4, the copolymer (A) having a weight average molecular weight of 5,000 to 38,000, the copolymer (A) containing the monomer (a) in an amount of 10 to 60% by weight based on a total weight of the copolymer (A)-constituting monomers, the formula (1) being as follows:

[Chem. 3]

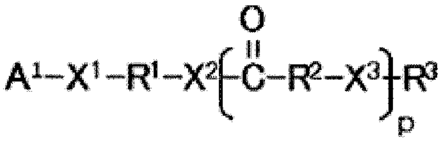

(1)

wherein $A^1$ is a polymerizable group; $-X^1-$, $-X^2-$, and $-X^3-$are each independently a group represented by -O- or -NH-; $R^1$ is a C1-C4 alkylene group; $R^2$ is a C2-C20 alkylene group; $R^3$ is a hydrogen atom; and p is an integer of 1 to 100, where when p is 2 or more, a plurality of $R^2$'s are the same as or different from each other and a plurality of $X^3$'s are the same as or different from each other, the formula (2) being as follows:

[Chem. 4]

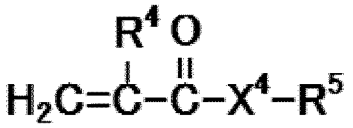

(2)

wherein $R^4$ is a hydrogen atom or a methyl group; $-X^4-$ is a group represented by -O- or -NH-; and $R^5$ is a linear or branched C5-C44 alkyl group.

In the present invention, the high storage stability of the friction modifier means, for example, that no precipitate is formed even when the friction modifier is stored at 25°C for 30 days. The high stability at high temperatures of the lubricating oil composition means, for example, that no precipitate is formed even when the lubricating oil composition is stored at 120°C for two hours.

<Copolymer (A)>

In the present invention, the copolymer (A) contains, as essential constituent monomers, a monomer (a) represented by the formula (1) and a monomer (b) represented by the formula (2). The monomer (a) among copolymer (A)-constituting monomers has an average value of p per mole of the monomer (a) of 1 to 4, the copolymer (A) has a weight average molecular weight of 5,000 to 38,000, and the copolymer (A) contains as a constituent monomer the monomer (a) in an amount of 10 to 60% by weight based on a total weight of the copolymer (A)-constituting monomers.

In the present invention, the copolymer (A) contains the monomer (a) represented by the formula (1) as an essential constituent monomer.

In the formula (1), $A^1$ is a monovalent polymerizable group. The polymerizable group means a functional group capable of undergoing a polymerization reaction, and is specifically a radically polymerizable group or a cationically polymerizable group. Specific examples of the polymerizable group include a vinyl group and a (meth)acryloyl group.

From the viewpoint of a friction reducing effect, $A^1$ is preferably a vinyl group or a (meth)acryloyl group, more preferably a (meth)acryloyl group.

In the present invention, "(meth)acryloyl" means "acryloyl and/or methacryloyl", and "(meth)acrylate" means "acrylate and/or methacrylate".

In the formula (1), $-X^1-$, $-X^2-$, and $-X^3-$ are each independently a group represented by -O- or -NH-.

From the viewpoint of a friction reducing effect, $-X^1-$, $-X^2-$, and $-X^3-$ are each preferably -O-.

In the formula (1), $R^1$ is a C1-C4 alkylene group.

Examples of the C1-C4 alkylene group include a methylene group, an ethylene group, a 1,2- or 1,3-propylene group, and a 1,2-, 1,3-, or 1,4-butylene group. From the viewpoint of a friction reducing effect, preferred of these are an ethylene group and a 1,2- or 1,3-propylene group, with an ethylene group being more preferred.

In the formula (1), p represents the number of moles of a lactam and/or a lactone added, which are described below. When p in the formula (1) is 2 or more, a plurality of $R^2$'s may be the same as or different from each other and a plurality of $X^3$'s may be the same as or different from each other.

From the viewpoints of a friction reduction effect and storage stability, the monomer (a) among the copolymer (A)-constituting monomers has an average value of p per mole of the monomer (a) (average number of moles added, hereinafter also referred to as a molar average value of p) of 1 to 4. The average value of p is preferably 1.5 to 3.5, particularly preferably 2.0 to 3.5.

If the average value of p per mole of the monomer (a) is more than 4, the friction reducing effect and storage

stability may deteriorate.

The reason why the storage stability of the friction modifier deteriorates is not clear, but it is presumed as follows. When the molar average value of p is more than 4, the number of ester groups and/or amide groups in the copolymer (A) is large, and thus, molecular aggregation tends to occur during long-term storage and the formation of precipitates is promoted. Furthermore, since the formation of precipitates is promoted, a large amount of the monomer (a) cannot be used as a constituent monomer of the copolymer (A). Thus, the friction reducing effect decreases.

When the monomer (a) constituting the copolymer (A) includes two or more monomers, the molar average value of p in the formula (1) is obtained by calculating the weighted average of the p values of the respective monomers included in the monomer (a) based on the molar fractions of the respective monomers.

The molar fractions of the monomers included in the monomer (a) having different p values can be calculated by analyzing the chemical formula and amount of each monomer constituting the copolymer (A) by a method such as pyrolysis GC/MS.

Alternatively, when the p value of each monomer before incorporation into the copolymer (A) is measured, the molar average value of p can be determined from the $^1$H-NMR (nuclear magnetic resonance) spectrum of the monomer (a). In an example where the "lactam and/or lactone" is ε-caprolactone, the molar average value of p can be calculated by dividing half of the integral value of the peak near 1.4 ppm (the peak of γ-hydrogen to the carbonyl carbon derived from ε-caprolactone) by the integral value of the peak near 6.4 ppm or the integral value of the peak near 6.1 ppm (the peak of one of the hydrogen atoms bonded to the unsaturated double bond of the acryloyl group or methacryloyl group).

The γ-hydrogen to the carbonyl carbon derived from ε-caprolactone refers to a hydrogen atom bonded to the carbon atom marked with * in the structural formula derived from ε-caprolactone ($-CO-CH_2-CH_2-C^*H_2-CH_2-CH_2-O-$).

The hydrogen atom bonded to the unsaturated double bond of the acryloyl group refers to a hydrogen atom bonded to the carbon atom marked with * in the structural formula of the acryloyl group represented by $H_2C^*=CH-CO-$. The hydrogen atom bonded to the unsaturated double bond of the methacryloyl group refers to a hydrogen atom bonded to the carbon atom marked with * in the structural formula of the methacryloyl group represented by $H_2C^*=C(CH_3)-CO-$.

Specifically, the molar average value of p can be calculated by the following formula.

(The case where $A^1$ in the formula (1) is an acryloyl group)

Molar average value of p = (half of integral value of peak of γ-hydrogen to carbonyl carbon derived from ε-caprolactone)/(integral value of peak of one of hydrogen atoms bonded to unsaturated double bond of acryloyl group)

(The case where $A^1$ in the formula (1) is a methacryloyl group)

Molar average value of p = (half of integral value of peak of γ-hydrogen to carbonyl carbon derived from ε-caprolactone)/(integral value of peak of one of hydrogen atoms bonded to unsaturated double bond of methacryloyl group)

$R^2$ in the formula (1) represents a C2-C20 alkylene group. Specific examples of the C2-C20 alkylene group include an ethylene group, an isopropylene group, a 1,2- or 1,3-propylene group, an isobutylene group, a 1,2-, 1,3-, or 1,4-butylene group, an isopentylene group, a 1,2-, 1,3-, 1,4-, or 1,5-pentylene group, an isohexylene group, a 1,2-, 1,3-, 1,4-, 1,5-, or 1,6-hexylene group, an isoheptylene group, a 1,2-, 1,3-, 1,4-, 1,5-, 1,6-, or 1,7-heptylene group, an isooctylene group, a 1,8-octylene group, an isononylene group, a 1,9-nonylene group, an isodecylene group, a 1,10-decylene group, an isoundecylene group, a 1,11-undecylene group, an isododecylene group, a 1,12-dodecylene group, an isotridecylene group, a 1,13-tridecylene group, an isotetradecylene group, a 1,14-tetradecylene group, an isopentadecylene group, a 1,15-pentadecylene group, an isohexadecylene group, a 1,16-hexadecylene group, an isoheptadecylene group, a 1,17-heptadecylene group, an isooctadecylene group, a 1,18-isooctadecylene group, an isononadecylene group, a 1,19-isononadecylene group, an isoeicosylene group, and a 1,20-eicosylene group.

From the viewpoints of a friction reducing effect, storage stability, and high-temperature stability, $R^2$ is preferably a C2-C17 alkylene group, more preferably a C2-C15 alkylene group, particularly preferably a C2-C13 alkylene group, most preferably a C2-C10 alkylene group.

$R^3$ in the formula (1) represents a hydrogen atom.

From the viewpoint of a friction reducing effect, preferred examples of the monomer (a) include an adduct of a hydroxyalkyl (meth)acryloyl monomer with a lactone (1 to 4 mol), an adduct of a hydroxyalkyl (meth)acryloyl monomer with a lactam (1 to 4 mol), an adduct of an aminoalkyl (meth)acryloyl monomer with a lactone (1 to 4 mol), and an adduct of an

aminoalkyl (meth)acryloyl monomer with a lactam (1 to 4 mol). More preferred is an adduct of a hydroxyalkyl (meth)acryloyl monomer with a lactone (1 to 4 mol).

In the above examples, the number of moles of lactone or lactam added refers to the average number of moles added.

Examples of the hydroxyalkyl (meth)acryloyl monomer include hydroxyalkyl (meth)acrylates (e.g., hydroxymethyl (meth)acrylate, hydroxyethyl (meth)acrylate, hydroxypropyl (meth)acrylate, hydroxybutyl (meth)acrylate) and hydroxyalkyl (meth)acrylamides (e.g., hydroxymethyl (meth)acrylamide, hydroxyethyl (meth)acrylamide, hydroxypropyl (meth)acrylamide, hydroxybutyl (meth)acrylamide).

Examples of the aminoalkyl (meth)acryloyl monomer include aminoalkyl (meth)acrylates (e.g., aminomethyl (meth)acrylate, aminoethyl (meth)acrylate, aminopropyl (meth)acrylate, aminobutyl (meth)acrylate) and aminoalkyl (meth)acrylamides (e.g., aminomethyl (meth)acrylamide, aminoethyl (meth)acrylamide, aminopropyl (meth)acrylamide, aminobutyl (meth)acrylamide).

The lactone includes those having 3 to 21 carbon atoms, such as β-propiolactone, γ-butyrolactone, δ-valerolactone, and ε-caprolactone.

The lactam includes those having 3 to 21 carbon atoms, such as β-lactam, γ-lactam, and δ-lactam.

The adduct of a hydroxyalkyl (meth)acryloyl monomer or aminoalkyl (meth)acryloyl monomer with a lactone (1 to 4 mol) can be obtained, for example, by ring-opening addition of a lactone to a hydroxyalkyl (meth)acryloyl monomer or aminoalkyl (meth)acryloyl monomer.

The reaction temperature during the ring-opening addition reaction is preferably 80°C to 150°C, more preferably 100°C to 140°C, from the viewpoint of reaction time.

The reaction time is preferably 2 to 24 hours, more preferably 3 to 10 hours.

The reaction may be performed in the presence of a catalyst.

The catalyst for the reaction may be any known catalyst, such as p-toluenesulfonic acid, tetrapropyl titanate, or stannous octanoate.

The amount of the catalyst used is preferably 0.01 to 5% by mass, more preferably 0.03 to 0.5% by mass, relative to the amount of a reaction product.

After the completion of the ring-opening addition reaction, the catalyst is desirably treated. For example, the catalyst is absorbed with an adsorbent and removed by filtering, or the catalyst is inactivated by neutralization.

The adduct of a hydroxyalkyl (meth)acryloyl monomer or aminoalkyl (meth)acryloyl monomer with a lactam (1 to 4 mol) can be obtained, for example, by ring-opening addition of a lactam to a hydroxyalkyl (meth)acryloyl monomer or aminoalkyl (meth)acryloyl monomer.

The reaction temperature during the ring-opening addition reaction of the lactam is preferably 80°C to 150°C, more preferably 100°C to 140°C, from the viewpoint of reaction time.

The reaction time is preferably 2 to 24 hours, more preferably 3 to 10 hours.

The reaction may be performed in the presence of a catalyst.

The catalyst for the reaction may be any known catalyst, such as tetrapropyl titanate or stannous octanoate.

The amount of the catalyst used is preferably 0.01 to 5% by mass, more preferably 0.03 to 0.5% by mass, relative to the amount of a reaction product.

After the completion of the ring-opening addition reaction, the catalyst is desirably treated. For example, the catalyst is absorbed with an adsorbent and removed by filtering, or the catalyst is inactivated by neutralization.

From the viewpoint of friction reducing properties, the monomer (a) is preferably an adduct of a hydroxyalkyl (C1-C4 hydroxyalkyl group) (meth)acrylate with a lactone (1 to 4 mol), more preferably an adduct of a hydroxyalkyl (C2-C4 hydroxyalkyl group) (meth)acrylate with a lactone (1 to 4 mol), still more preferably an adduct of a hydroxyalkyl (C2-C3 hydroxyalkyl group) (meth)acrylate with ε-caprolactone (1 to 4 mol), particularly preferably an adduct of hydroxyethyl (meth)acrylate with ε-caprolactone (1 to 4 mol), most preferably an adduct of hydroxyethyl (meth)acrylate with ε-caprolactone (1 to 3 mol).

From the viewpoint of solubility in a lubricating oil base oil, a structural unit derived from the monomer (a) (a structure including a single bond obtained by a reaction of the polymerizable group (e.g., a vinyl group) of the monomer (a)) preferably has a specific solubility parameter (hereinafter sometimes abbreviated as a SP value).

The SP value of the structural unit derived from the monomer (a) is preferably 10.0 to 12.5 $(cal/cm^3)^{1/2}$, more preferably 10.3 to 12.3 $(cal/cm^3)^{1/2}$, particularly preferably 10.5 to 12.0 $(cal/cm^3)^{1/2}$.

The SP value herein refers to a value calculated using the numerical values (the heat of vaporization and the molar volume at 25°C of an atom or a functional group) disclosed in the Fedors method (Polymer Engineering and Science, February, 1974, Vol. 14, No. 2, pp. 147-154) on p. 152 (Table 5) and using the equation (28) described on p. 153. Specifically, the SP value can be calculated by substituting, into the equation below, the numerical values $\Delta e_i$ and $v_i$ corresponding to the types of atoms and groups in the molecular structure selected from the numerical values of $\Delta e_i$ and $v_i$ (Fedors parameters) in Table 1 below. SP value = $(\Sigma\Delta e_i/\Sigma v_i)^{1/2}$

[Table 1]

Fedors parameters

| Atom or group | $\Delta e_i$ [cal/mol] | $v_i$ [cm$^3$/mol] |
|---|---|---|
| $CH_3$ | 1125 | 33.5 |
| $CH_2$ | 1180 | 16.1 |
| CH | 820 | -1.0 |
| C | 350 | -19.2 |
| $H_2C=$ | 1030 | 28.5 |
| -CH= | 1030 | 13.5 |
| C= | 1030 | -5.5 |
| HC≡ | 920 | 27.4 |
| -C≡ | 1690 | 6.5 |
| Phenyl | 7630 | 71.4 |
| Phenylene (o.m.p) | 7630 | 52.4 |
| Phenyl (trisubstituted) | 7630 | 33.4 |
| Phenyl (tetrasubstituted) | 7630 | 14.4 |
| Phenyl (pentasubstituted) | 7630 | -4.6 |
| Phenyl (hexasubstituted) | 7630 | -23.6 |
| Ring closure 5 or more atoms | 250 | 16 |
| Ring closure 3 or 4 atoms | 750 | 18 |
| $CO_3$ (carbonate) | 4200 | 22.0 |
| COOH | 6600 | 28.5 |
| $CO_2$ | 4300 | 18.0 |
| CO | 4150 | 10.8 |
| CHO (aldehyde) | 5100 | 22.3 |
| $CO_2CO_2$ (oxalate) | 6400 | 37.3 |
| $C_2O_3$ (anhydride) | 7300 | 30.0 |
| HCOO (formate) | 4300 | 32.5 |
| $CONH_2$ | 10000 | 17.5 |
| CONH | 8000 | 9.5 |
| CON | 7050 | -7.7 |
| HCON | 6600 | 11.3 |
| HCONH | 10500 | 27.0 |
| COCl | 5000 | 38.0 |
| $NH_2$ | 3000 | 19.2 |
| NH | 2000 | 4.5 |
| N | 1000 | -9.0 |
| -N= | 2800 | 5.0 |
| CN | 6100 | 24.0 |
| $NO_2$ (aliphatic) | 7000 | 24.0 |
| $NO_2$ (aromatic) | 3670 | 32.0 |
| $NO_3$ | 5000 | 33.5 |
| $NO_2$ (nitrite) | 2800 | 33.5 |
| CSN | 4800 | 37.0 |
| NCO | 6800 | 35.0 |
| $NF_2$ | 1830 | 33.1 |
| $NF_2$ | 1210 | 24.5 |
| O | 800 | 3.8 |
| OH | 7120 | 10.0 |
| OH (disubstituted or on adjacent C atoms) | 5220 | 13.0 |

When the copolymer (A) contains two or more monomers as monomer (a), it is preferable that the arithmetic mean of the SP values of the monomers falls within the above-mentioned range. Here, the SP value of each monomer is calculated by the above-mentioned method, and the arithmetic mean is determined based on the weight fraction and the SP value of each monomer.

In the present invention, the copolymer (A) contains the monomer (b) represented by the formula (2) as an

essential constituent monomer.

In the formula (2), $R^4$ is a hydrogen atom or a methyl group. From the viewpoints of friction reducing properties and a viscosity index improving effect, a methyl group is preferred.

In the formula (2), $-X^4-$ is a group represented by - O- or -NH-. From the viewpoint of friction reducing properties, -O- is preferred.

In the formula (2), $R^5$ is a linear or branched C5-C44 alkyl group, and examples thereof include a pentyl group, a hexyl group, an n-octyl group, a 2-ethylhexyl group, an n-nonyl group, an isononyl group, an n-decyl group, an isodecyl group, an n-undecyl group, an isoundecyl group, an n-dodecyl group, an isododecyl group, an n-tridecyl group, an isotridecyl group, an n-tetradecyl group, a 2-ethyldodecyl group, an n-pentadecyl group, a 2-methyltetradecyl group, an n-hexadecyl group, an isohexadecyl group, an n-heptadecyl group, an isoheptadecyl group, a 2-ethylpentadecyl group, a 2-octylnonyl group, a 2-(3-methylhexyl)-7-methyl-nonyl group, an n-octadecyl group, an isooctadecyl group, a 2-hexylundecyl group, a 2-ethylheptadecyl group, a 1-hexyltridecyl group, a n-icosyl group, a 2-octylundecyl group, an isoicosyl group, a 1-undecyldodecyl group, a 1-octylpentadecyl group, a 2-decyltridecyl group, a n-tetraicosyl group, a 2-decyltetradecyl group, a 2-dodecylpentadecyl group, a 2-heptylicosyl group, a 2-dodecylhexadecyl group, a n-triacontyl group, 2-tetradecyloctadecyl group, a n-hexatriacontyl group, a n-tetracontyl group, a 2-ethyltetracontyl group, and olefins (e.g., propylene oligomers (dimer to tetradecamer), ethylene/propylene oligomers (dimer to eicosamer), and isobutene oligomers (dimer to decamer)).

Of these, from the viewpoint of base oil solubility, $R^5$ is preferably a linear or branched C10-C34 alkyl group, more preferably a linear or branched C12-C32 alkyl group, particularly preferably a linear or branched C16-C32 alkyl group, most preferably a linear C16-C22 alkyl group or a branched C18-C32 alkyl group.

Examples of the monomer (b) include pentyl (meth)acrylate, hexyl (meth)acrylate, n-octyl (meth)acrylate, 2-ethylhexyl (meth)acrylate, n-nonyl (meth)acrylate, isononyl (meth)acrylate, n-decyl (meth)acrylate, isodecyl (meth) acrylate, n-undecyl (meth)acrylate, isoundecyl (meth)acrylate, n-dodecyl (meth)acrylate, isododecyl (meth)acrylate, n-tridecyl (meth)acrylate, isotridecyl (meth)acrylate, n-tetradecyl (meth)acrylate, 2-ethyldodecyl (meth)acrylate, n-pentadecyl (meth)acrylate, 2-methyltetradecyl (meth)acrylate, n-hexadecyl (meth)acrylate, isohexadecyl (meth)acrylate, n-heptadecyl (meth)acrylate, isoheptadecyl (meth)acrylate, 2-ethylpentadecyl (meth)acrylate, 2-octylnonyl (meth)acrylate, 2-(3-methylhexyl)-7-methyl-nonyl (meth)acrylate, n-octadecyl (meth)acrylate, isooctadecyl (meth)acrylate, 2-hexylundecyl (meth)acrylate, 2-ethylheptadecyl (meth)acrylate, 1-hexyltridecyl (meth)acrylate, n-icosyl (meth)acrylate, 2-octylundecyl (meth)acrylate, isoicosyl (meth)acrylate, 1-undecyldodecyl (meth)acrylate, 1-octylpentadecyl (meth)acrylate, 2-decyltridecyl (meth)acrylate, n-tetraicosyl (meth)acrylate, 2-decyltetradecyl (meth)acrylate, 2-dodecylpentadecyl (meth) acrylate, 2-heptylicosyl (meth)acrylate, 2-dodecylhexadecyl (meth)acrylate, n-triacontyl (meth)acrylate, 2-tetradecyloctadecyl (meth)acrylate, n-hexatriacontyl (meth)acrylate, n-tetracontyl (meth)acrylate, and 2-ethyltetracontyl (meth)acrylate.

The monomer (b) preferably includes at least one selected from the group consisting of n-dodecyl (meth)acrylate (also referred to as (meth)acrylic acid n-dodecyl ester), a (meth)acrylic acid ester of a linear or branched C12-C13 alkyl alcohol, n-hexadecyl (meth)acrylate (also referred to as (meth)acrylic acid n-hexadecyl ester), n-octadecyl (meth)acrylate (also referred to as (meth)acrylic acid n-octadecyl ester), 2-decyltetradecyl (meth)acrylate (also referred to as (meth) acrylic acid 2-decyltetradecyl ester), 2-dodecylhexadecyl (meth)acrylate (also referred to as (meth)acrylic acid 2-dodecylhexadecyl ester), and 2-tetradecyloctadecyl (meth)acrylate (also referred to as (meth)acrylic acid 2-tetradecyloctadecyl ester).

The copolymer (A) herein may contain a (meth)acryloyl monomer (c) having a C1-C4 alkyl group. Examples of the (meth)acryloyl monomer (c) having a C1-C4 alkyl group include (meth)acrylates having a C1-C4 alkyl group and (meth) acrylamides having a C1-C4 alkyl group.

Examples of the (meth)acryloyl monomer (c) having a C1-C4 alkyl group include methyl (meth)acrylate, ethyl (meth)acrylate, n-propyl (meth)acrylate, isopropyl (meth)acrylate, n-butyl (meth)acrylate, tert-butyl (meth)acrylate, sec-butyl (meth)acrylate, N-methyl (meth)acrylamide, N-ethyl (meth)acrylamide, N-propyl (meth)acrylamide, and N-butyl (meth)acrylamide.

From the viewpoints of friction reducing properties and a viscosity index improving effect, the monomer (c) is preferably a (meth)acrylate having a C1-C4 alkyl group, more preferably a (meth)acrylate having a linear C1-C4 alkyl group, particularly preferably methyl (meth)acrylate or butyl (meth)acrylate.

The copolymer (A) may contain a monomer that is different from the above-mentioned monomers as a constituent monomer, and may contain, for example, one or more constituent monomers selected from the group consisting of a nitrogen-containing monomer (d), which is different from the monomers (a), (b), and (c), and a hydroxy group-containing monomer (e) and a phosphorus-containing monomer (f), which are different from the monomer (a).

Examples of the nitrogen-containing monomer (d) include the following monomers (d1) to (d4).

Amide group-containing monomer (d1)

Examples include monomers in which a nitrogen atom is present only in an amide group including: (meth)acrylamide; monoalkylaminoalkyl (meth)acrylamides [those having an aminoalkyl group (C2-C6) in which one C1-C4 alkyl group is bonded to a nitrogen atom, e.g., N-methylaminoethyl (meth)acrylamide, N-ethylaminoethyl (meth)acrylamide, N-isopropylamino-n-butyl (meth)acrylamide, N-n-butylamino-n-butyl (meth)acrylamide and N-isobutylamino-n-butyl (meth)acrylamide]; dialkylamino(meth)acrylamides [those in which two C1-C4 alkyl groups are bonded to a nitrogen atom, e.g., N,N-dimethyl (meth)acrylamide, N,N-diethyl (meth)acrylamide, N,N-diisopropyl (meth)acrylamide, and N,N-di-n-butyl (meth)acrylamide]; dialkylaminoalkyl (meth)acrylamides [those having an aminoalkyl group (C2-C6) in which two C1-C4 alkyl groups are bonded to a nitrogen atom, e.g., N,N-dimethylaminoethyl (meth)acrylamide, N,N-diethylaminoethyl (meth)acrylamide, N,N-dimethylaminopropyl (meth)acrylamide, and N,N-di-n-butylaminobutyl (meth)acrylamide]; and N-vinylcarboxylic amides [e.g., N-vinylformamide, N-vinylacetamide, N-vinyl-propionamide and N-vinyl-isopropionylamide, and N-vinylhydroxyacetamide].

Nitro group-containing monomer (d2)

Examples include 4-nitrostyrene.

Primary to tertiary amino group-containing monomer (d3)

Examples include primary amino group-containing vinyl monomers {C3-C6 alkenylamines [e.g., (meth)allylamine and crotylamine], aminoalkyl (C2-C6) (meth)acrylates [aminoethyl (meth)acrylate, etc.]}; secondary amino group-containing vinyl monomers {monoalkylaminoalkyl (meth)acrylates [those having an aminoalkyl group (C2-C6) in which one C1-C6 alkyl group is bonded to a nitrogen atom, e.g., t-butylaminoethyl (meth)acrylate and methylaminoethyl (meth)acrylate], C6-C12 dialkenylamines [e.g., di(meth)allylamine]}; tertiary amino group-containing vinyl monomers {dialkylaminoalkyl (meth)acrylates [those having an aminoalkyl group (C2-C6) in which two C1-C6 alkyl groups are bonded to a nitrogen atom, e.g., N,N-dimethylaminoethyl (meth)acrylate and N,N-diethylaminoethyl (meth)acrylate]; nitrogen-containing alicyclic (meth)acrylates [e.g., morpholinoethyl (meth)acrylate]; aromatic vinyl monomers [e.g., N,N-diphenylaminoethyl (meth)acrylamide, N,N-dimethylaminostyrene, 4-vinylpyridine, 2-vinylpyridine, N-vinylpyrrole, N-vinylpyrrolidone, and N-vinylthiopyrrolidone]; and salts thereof such as hydrochlorides, sulfates, phosphates, and lower alkyl (C1-C8) monocarboxylic acid (e.g., acetic acid and propionic acid) salts.

Nitrile group-containing monomer (d4)

Examples include (meth)acrylonitrile.

Of these nitrogen-containing vinyl monomers (d), preferred are an amide group-containing monomer (d1) and a primary to tertiary amino group-containing monomer (d3), and more preferred are N,N-diphenylaminoethyl (meth)acrylamide, dimethylaminoethyl (meth)acrylamide, diethylaminoethyl (meth)acrylamide, dimethylaminopropyl (meth)acrylamide, N,N-dimethylaminoethyl (meth)acrylate, and N,N-diethylaminoethyl (meth)acrylate.

Specific examples of the hydroxy group-containing monomer (e) are as follows.

Examples include hydroxy group-containing aromatic monomers (e.g., p-hydroxystyrene), hydroxyalkyl (C2-C6) (meth)acrylates [e.g., 2-hydroxyethyl (meth)acrylate, 2- or 3-hydroxypropyl (meth)acrylate, and 2-hydroxy-2-methylpropyl (meth)acrylate], mono- or di-hydroxyalkyl (C1-C4)-substituted (meth)acrylamides [e.g., N,N-dihydroxymethyl (meth)acrylamide, N,N-dihydroxypropyl (meth)acrylamide, and N,N-di-2-hydroxybutyl (meth)acrylamide], vinyl alcohol, C3-C12 alkenols [e.g., (meth)allyl alcohol, crotyl alcohol, isocrotyl alcohol, 1-octenol, and 1-undecenol], C4-C12 alkene monools or C4-C12 alkene diols [e.g., 1-buten-3-ol, 2-buten-1-ol, and 2-butene-1,4-diol], hydroxyalkyl (C1-C6) alkenyl (C3-C10) ethers (e.g., 2-hydroxyethyl propenyl ether), and alkenyl (C3-C10) ethers or (meth)acrylates of polyhydric alcohols (having 3 to 8 hydroxy groups) (e.g., glycerol, pentaerythritol, sorbitol, sorbitan, diglycerol, saccharides, and sucrose) [e.g., sucrose (meth)allyl ether].

Examples of the phosphorus-containing monomer (f) include the following monomers (f1) and (f2).

Phosphate ester group-containing monomer (f1)

Examples include (meth)acryloyloxyalkyl (C2-C4) phosphate esters [(meth)acryloyloxyethyl phosphate and (meth)acryloyloxy isopropyl phosphate] and alkenyl phosphate esters [e.g., vinyl phosphate, allyl phosphate, propenyl phosphate, isopropenyl phosphate, butenyl phosphate, pentenyl phosphate, octenyl phosphate, decenyl phosphate, and dodecenyl phosphate].

Phosphono group-containing monomer (f2)

Examples include (meth)acryloyloxy alkyl (C2-C4) phosphonic acids [e.g., (meth)acryloyloxyethyl phosphonic acid] and alkenyl (C2-C12) phosphonic acids [e.g., vinylphosphonic acid, allylphosphonic acid, and octenylphosphonic acid].

Of these phosphorus-containing monomers (f), preferred is a phosphate ester group-containing monomer (f1), and more preferred is a (meth)acryloyloxyalkyl (C2-C4) phosphate ester, and particularly preferred is (meth)acryloyloxyethyl phosphate.

The copolymer (A) may contain any of the following monomers (g) to (n) as constituent monomers in addition to the monomers (a) to (f).

Alkoxyalkyl ether monomer (g)

Examples include methoxyethyl (meth)acrylate, methoxypropyl (meth)acrylate, methoxybutyl (meth)acrylate, methoxyheptyl (meth)acrylate, methoxyhexyl (meth)acrylate, methoxypentyl (meth)acrylate, methoxyoctyl (meth)acrylate, ethoxyethyl (meth)acrylate, ethoxypropyl (meth)acrylate, ethoxybutyl (meth)acrylate, ethoxyheptyl (meth)acrylate, ethoxyhexyl (meth)acrylate, ethoxypentyl (meth)acrylate, ethoxyoctyl (meth)acrylate, propoxymethyl (meth)acrylate, propoxyethyl (meth)acrylate, propoxypropyl (meth)acrylate, propoxybutyl (meth)acrylate, propoxyheptyl (meth)acrylate, propoxyhexyl (meth)acrylate, propoxypentyl (meth)acrylate, propoxyoctyl (meth)acrylate, butoxymethyl (meth)acrylate, butoxyethyl (meth)acrylate, butoxypropyl (meth)acrylate, butoxybutyl (meth)acrylate, butoxyheptyl (meth)acrylate, butoxyhexyl (meth)acrylate, butoxypentyl (meth)acrylate, and butoxyoctyl (meth)acrylate.

Of these monomers (g), preferred are methoxyethyl (meth)acrylate, ethoxyethyl (meth)acrylate, and butoxyethyl (meth)acrylate.

Aliphatic hydrocarbon monomer (h)

Examples include C2-C20 alkenes (e.g., ethylene, propylene, butene, isobutylene, pentene, heptene, diisobutylene, octene, dodecene, and octadecene) and C4-C12 alkadienes (e.g., butadiene, isoprene, 1,4-pentadiene, 1,6-heptadiene, and 1,7-octadiene).

Alicyclic hydrocarbon monomer (i)

Examples include cyclohexene, (di)cyclopentadiene, pinene, limonene, vinylcyclohexene, and ethylidenebicycloheptene.

Aromatic hydrocarbon monomer (j)

Examples include styrene, $\alpha$-methylstyrene, vinyltoluene, 2,4-dimethylstyrene, 4-ethylstyrene, 4-isopropylstyrene, 4-butylstyrene, 4-phenylstyrene, 4-cyclohexylstyrene, 4-benzylstyrene, indene, 4-crotylbenzene, and 2-vinylnaphthalene.

Vinyl esters, vinyl ethers, vinyl ketones (k)

Examples include vinyl esters of C2-C12 saturated fatty acids (e.g., vinyl acetate, vinyl propionate, vinyl butyrate, and vinyl octanoate), C1-C12 alkyl, aryl, or alkoxyalkyl vinyl ethers (e.g., methyl vinyl ether, ethyl vinyl ether, propyl vinyl ether, butyl vinyl ether, 2-ethylhexyl vinyl ether, phenyl vinyl ether, vinyl-2-methoxyethyl ether, and vinyl-2-butoxyethyl ether), and C1-C8 alkyl or aryl vinyl ketones (e.g., methyl vinyl ketone, ethyl vinyl ketone, and phenyl vinyl ketone).

Epoxy group-containing monomer (1)

Examples include glycidyl (meth)acrylate and glycidyl (meth)allyl ether.

Halogen-containing monomer (m)

Examples include vinyl chloride, vinyl bromide, vinylidene chloride, (meth)allyl chloride, and halogenated styrenes (e.g., dichlorostyrene).

Ester of unsaturated polycarboxylic acid (n)

Examples include alkyl, cycloalkyl, or aralkyl esters of unsaturated polycarboxylic acids [C1-C8 alkyl diesters of unsaturated dicarboxylic acids (e.g., maleic acid, fumaric acid, and itaconic acid) (dimethyl maleate, dimethyl fumarate, diethyl maleate, and dioctyl maleate)].

The weight percentage of the monomer (a) among the copolymer (A)-constituting monomers is 10 to 60% by weight, preferably 15 to 50% by weight, more preferably 20 to 45% by weight, particularly preferably 25 to 40% by weight, based on the total weight of the copolymer (A)-constituting monomers.

If the weight percentage of the monomer (a) is lower than 10% by weight, the friction reducing effect is low, and if it is higher than 60% by weight, the storage stability and high-temperature stability decrease.

From the viewpoint of base oil solubility, the weight percentage of the monomer (b) among the copolymer (A)-constituting monomers is preferably 40 to 90% by weight, more preferably 45 to 85% by weight, still more preferably 50 to 80% by weight, particularly preferably 55 to 75% by weight, based on the total weight of the copolymer (A)-constituting monomers.

From the viewpoint of friction reducing properties, the percentage of the total weight of the monomer (a) and the monomer (b) among the copolymer (A)-constituting monomers is preferably 70% by weight or more, more preferably 75% by weight or more, particularly preferably 75 to 95% by weight, based on the total weight of the copolymer (A)-constituting monomers.

From the viewpoints of friction reducing properties and base oil solubility, the ratio (b/a) of the weight of the monomer (b) to the weight of the monomer (a) is preferably 0.8 to 5.0, more preferably 1.0 to 3.5, particularly preferably 1.2 to 2.6 in the copolymer (A)-constituting monomers.

From the viewpoint of friction reducing properties, the weight percentage of the monomer (c) among the copolymer (A)-constituting monomers is preferably 30% by weight or less, more preferably 25% by weight or less, particularly preferably 5 to 25% by weight, based on the total weight of the copolymer (A)-constituting monomers.

From the viewpoint of friction reducing properties, the percentage of the total weight of the monomers (d) to (f) among the copolymer (A)-constituting monomers is preferably 20% by weight or less, more preferably 10% by weight or less, based on the total weight of the copolymer (A)-constituting monomers.

From the viewpoint of friction reducing properties, the weight percentage of the monomer (d) is preferably 5% by weight or less, more preferably 3% by weight or less, particularly preferably 1% by weight or less, based on the total weight of the copolymer (A)-constituting monomers.

From the viewpoint of friction reducing properties, the weight percentage of the monomer (e) is preferably 10% by weight or less, more preferably 5% by weight or less, based on the total weight of the copolymer (A)-constituting monomers.

From the viewpoint of friction reducing properties, the percentage of the total weight of the monomers (g) to (n) among the copolymer (A)-constituting monomers is preferably 10% by weight or less, more preferably 5% by weight or less, based on the total weight of the copolymer (A)-constituting monomers.

The weight percentage of each of the monomers (a) to (n) in the copolymer (A) can be measured by a method such as pyrolysis GC/MS. The weight percentage of each of the constituent monomers used in the production of the copolymer (A) may be regarded as the weight percentage of each of the monomers (a) to (n) in the copolymer (A).

From the viewpoint of friction reducing properties and storage stability, the ratio (a/b) of the length of a side chain derived from the monomer (a) to the length of a side chain derived from the monomer (b) in the copolymer (A) is preferably 0.5 to 2.1, more preferably 0.9 to 1.8 [Here, the ratio is a ratio of the molar average length of a side chain of the monomer (a) {the molar average length of $-R^1-X^2-(C(=O)R^2-X^3-)_p$ in the formula (1)} to the molar average number of carbon atoms of the alkyl group of the monomer (b) constituting the copolymer (A) (which is a molar average of the number of carbon atoms of $R^5$ when $R^5$ in the formula (2) is linear, and is a molar average of the number of carbon atoms of the longest alkyl group when $R^5$ is a branched alkyl group).].

With the ratio (a/b) falling within the above range, the hydroxy group or amino group in the monomer (a) is likely to adsorb to metal, and a friction reducing effect is likely to be obtained. In addition, molecular aggregation tends to be suppressed, leading to good storage stability.

Here, when the monomer (a) is an adduct of hydroxyethyl methacrylate with ε-caprolactone (1 mol), the length of the side chain [$-CH_2CH_2O(CCH_2CH_2CH_2CH_2CH_2O)$] of the monomer (a) is determined to be 10 by counting the number of C atoms and O atoms bonded to each other in a chain.

When the alkyl group of the monomer (b) is a branched alkyl group, the number of carbon atoms of the longest group is regarded as the number of carbon atoms of the alkyl group of the monomer (b). For example, when $R^5$ is a 2-tetradecyloctadecyl group, the number of carbon atoms of the alkyl group of the monomer (b) is 18.

For example, when the monomer (b) constituting the copolymer (A) includes 0.5 parts by mole of 2-tetradecyloctadecyl methacrylate and 0.5 parts by mole of dodecyl methacrylate, the molar average number of carbon atoms of the alkyl group of the monomer (b) constituting the copolymer (A) is calculated to be 15 from the following formula.

Molar average number of carbon atoms = $(18 \times 0.5 + 12 \times 0.5)/(0.5 + 0.5) = 15$

From the viewpoints of base oil solubility and a viscosity index improving effect, the SP value of the copolymer (A) is preferably 8.5 to 11.5 $(cal/cm^3)^{1/2}$, more preferably 8.7 to 11.0 $(cal/cm^3)^{1/2}$, still more preferably 8.9 to 10.5 $(cal/cm^3)^{1/2}$, particularly preferably 9.2 to 10.2 $(cal/cm^3)^{1/2}$.

The SP value of the copolymer (A) refers to the arithmetic mean of the SP values, which are calculated using the SP value calculation method described above, of the structural units derived from the copolymer (A)-constituting monomers determined based on the weight fractions of the constituent monomers used in the production (Each structural unit has a structure including a single bond obtained by a polymerization reaction of the polymerizable group (e.g., a vinyl group) of the corresponding monomer constituting the copolymer (A).). For example, in the case of a methyl methacrylate monomer, a structural unit derived from methyl methacrylate consists of two $CH_3$ groups, one $CH_2$ group, one C atom, and one $CO_2$ group. Thus, the SP value of the structural unit derived from methyl methacrylate is found to be 9.933 $(cal/cm^3)^{1/2}$ from the following equations. Similarly, the SP value of a structural unit derived from ethyl methacrylate is calculated to be 9.721 $(cal/cm^3)^{1/2}$.

$$\Sigma \Delta e_i = 1125 \times 2 + 1180 + 350 + 4300 = 8080$$

$$\Sigma v_i = 33.5 \times 2 + 16.1 - 19.2 + 18.0 = 81.9$$

$$\delta = (8080/81.9)^{1/2} = 9.933\ (cal/cm^3)^{1/2}$$

In the case of a polymer including 50% by weight methyl methacrylate and 50% by weight ethyl methacrylate, the SP value of the polymer is determined by calculating the arithmetic mean of the SP values of the structural units derived from the monomers of the polymer based on the weight fractions as described below.

SP value of polymer = $(9.933 \times 50 + 9.721 \times 50)/100 = 9.827$

The SP value of the copolymer (A) can be adjusted to fall within a desired range by appropriately adjusting the monomers to be used and their weight fractions. Specifically, the SP value can be decreased by using many monomers having a long carbon chain alkyl group, and the SP value can be increased by using many monomers having a short carbon chain alkyl group.

The weight average molecular weight (hereinafter abbreviated as Mw) of the copolymer (A) is 5,000 to 38,000, preferably 10,000 to 35,000, more preferably 15,000 to 30,000.

If Mw is less than 5,000, the friction reducing properties are low, and if it is more than 38,000, the high-temperature stability decreases.

The reason why the high-temperature stability of the lubricating oil composition deteriorates when the weight-average molecular weight of the copolymer (A) is more than 38,000 is not clear, but it is presumed as follows. When the temperature of the lubricating oil composition is low, the copolymer (A) is present in a globular form in which the polar groups are not exposed, and the molecules expand as the temperature increases. When the weight-average molecular weight is more than 38,000, it is presumed that the side chain derived from the highly polar monomer (a) (represented by $\{-C(=O)-R^2-X^3-R^3\}$ in the formula (1)) can no longer be sufficiently concealed by the side chain derived from the monomer (b) (represented by $R^5$ in the formula (2)). Thereby, the formation of precipitates is promoted.

The Mw can be measured by gel permeation chromatography under the following conditions.

<Conditions for measuring Mw of copolymer (A)>

Apparatus: "HLC-8320GPC" (Tosoh Corporation)
Column: "Guardcolumn Super HZM-M" (Tosoh Corporation), a single column; "TSKgel Super HZM-M" (Tosoh Corporation), three columns
Measurement temperature: 40°C
Sample solution: a 0.25% by weight tetrahydrofuran solution
Amount of solution to be injected: 100 μl
Detector: Refractive index detector
Reference material: 12 types of standard polystyrene (TSKstandard POLYSTYRENE) (molecular weight: 500, 1,050, 2,800, 5,970, 9,100, 18,100, 37,900, 96,400, 190,000, 355,000, 1,090,000, 2,890,000) (Tosoh Corporation)

The copolymer (A) can be obtained by a known production method. Specifically, the copolymer (A) can be obtained by solution polymerization of the monomers in a solvent in the presence of a polymerization catalyst.

Examples of the solvent include toluene, xylene, C9-C10 alkylbenzenes, methyl ethyl ketone, ethyl acetate, 2-propanol, and base oils, which are described below.

Examples of the polymerization catalyst include azo catalysts (e.g., azobisisobutyronitrile and azobisvaleronitrile), peroxide catalysts (e.g., benzoyl peroxide, cumyl peroxide, and lauryl peroxide), and redox catalysts (e.g., a mixture of benzoyl peroxide and a tertiary amine). A known chain transfer agent (e.g., C2-C20 alkylmercaptans) can also be used, if necessary.

The polymerization temperature is preferably 25°C to 140°C, more preferably 50°C to 120°C. The copolymer (A) can be obtained by bulk polymerization, emulsion polymerization, or suspension polymerization as well as by solution polymerization.

The polymerization form of the copolymer (A) may be either a random addition polymer or an alternating copolymer, and may be either a graft copolymer or a block copolymer.

It suffices that the friction modifier of the present invention contains the copolymer (A). It may further contain a base oil from the viewpoint of handleability (ease of addition to a lubricating oil composition, etc.).

Examples of the base oil include mineral oils (e.g., solvent refined oils, paraffin oils, high viscosity index oils containing isoparaffin, high viscosity index oils obtained by hydrocracking isoparaffin, and naphthenic oils), synthetic lubricating oils (e.g., hydrocarbon-based synthetic lubricating oils, such as poly-$\alpha$-olefin-based synthetic lubricating oils, and ester-based synthetic lubricating oils), and mixtures thereof. Of these, mineral oils are preferred from the viewpoint of insulating properties.

From the viewpoint of handleability (ease of addition to a lubricating oil composition, etc.), the amount of the copolymer (A) in the friction modifier is preferably 20 to 90% by weight, more preferably 30 to 80% by weight, based on the weight of the friction modifier.

From the viewpoint of handleability (ease of addition to a lubricating oil composition, etc.), the amount of the base oil in the friction modifier is preferably 10 to 80% by weight, more preferably 20 to 70% by weight, based on the weight of the friction modifier.

The friction modifier of the present invention can have both a friction reducing effect and storage stability, and is therefore suitable for use in oils such as gear oils (differential oils, industrial gear oils, etc.), MTFs, transmission oils (ATFs, belt-CVTFs, etc.), traction oils (toroidal-CVTFs, etc.), shock absorber oils, power steering oils, hydraulic oils (construction machinery hydraulic oils, industrial hydraulic oils, etc.), and engine oils. The friction modifier of the present invention is preferably used as a friction modifier for transmission oils, electric motor oils, and multi-purpose oils for both transmissions and electric motors in electric vehicles or hybrid vehicles, and is particularly preferably used as a friction modifier for multi-purpose oils for both transmissions and electric motors in electric vehicles or hybrid vehicles.

<Lubricating oil composition>

The lubricating oil composition of the present invention contains the friction modifier of the present invention and a base oil. When the friction modifier contains a base oil, the base oil in the lubricating oil composition may be the same as or different from the base oil in the friction modifier.

Examples of the base oil in the lubricating oil composition include mineral oils (e.g., solvent refined oils, paraffin oils, high viscosity index oils containing isoparaffin, high viscosity index oils obtained by hydrocracking isoparaffin, and naphthenic oils), synthetic lubricating oils (e.g., hydrocarbon-based synthetic lubricating oils, such as poly-$\alpha$-olefin-based synthetic lubricating oils, and ester-based synthetic lubricating oils), and mixtures thereof. Of these, mineral oils are preferred from the viewpoint of insulating properties.

The kinematic viscosity at 100°C of the base oil (measured according to JIS-K 2283 (2000)) is preferably 1 to 10 $mm^2/s$, more preferably 1 to 4 $mm^2/s$, from the viewpoint of the solubility of the copolymer (A).

The viscosity index of the base oil (measured according to JIS-K 2283 (2000)) is preferably 100 or more, more preferably 110 or more, from the viewpoint of a viscosity index improving effect.

The cloud point of the base oil (measured according to JIS-K 2269 (1987)) is preferably -5°C or lower, more preferably -15°C or lower. The base oil having a cloud point within this range can provide a lubricating oil composition with good low-temperature viscosity.

From the viewpoint of compatibility, the absolute value of the difference between the SP value of the copolymer (A) and the SP value of the base oil in the lubricating oil composition ($\Delta$SP) is preferably 0.5 to 3.2 $(cal/cm^3)^{1/2}$, more preferably 0.6 to 2.5 $(cal/cm^3)^{1/2}$, particularly preferably 0.6 to 2.1 $(cal/cm^3)^{1/2}$, most preferably 0.7 to 1.7 $(cal/cm^3)^{1/2}$,

The amount of the copolymer (A) in the lubricating oil composition of the present invention is preferably 0.1 to 30% by weight, more preferably 0.1 to 20% by weight, particularly preferably 0.1 to 10% by weight, based on the weight of the lubricating oil composition, from the viewpoint of a friction reducing effect.

The lubricating oil composition of the present invention is suitable for use in oils such as gear oils (differential oils,

industrial gear oils, etc.), MTFs, transmission oils (ATFs, belt-CVTFs, etc.), traction oils (toroidal-CVTFs, etc.), shock absorber oils, power steering oils, hydraulic oils (construction machinery hydraulic oils, industrial hydraulic oils, etc.), and engine oils. The lubricating oil composition of the present invention is preferably useful as transmission oils, electric motor oils, and multi-purpose oils for both transmissions and electric motors in electric vehicles or hybrid vehicles, and is particularly preferably useful as multi-purpose oils for both transmissions and electric motors in electric vehicles or hybrid vehicles.

The lubricating oil composition of the present invention may contain various additives. Examples of the additives are as follows.

(1) Viscosity index improver

Examples include an alkyl (meth)acrylate having a number of carbon atoms (hereinafter sometimes abbreviated as C) of 1 to 7/(C8-40) linear or branched alkyl (meth)acrylate copolymer, a dispersing monomer (amine monomer, etc.)/(C1-7) alkyl (meth)acrylate/(C8-40) linear or branched alkyl (meth)acrylate copolymer, a hydroxy group-containing monomer/(C1-7) alkyl (meth)acrylate/(C8-40) linear or branched alkyl (meth)acrylate copolymer, a comb-type polymer (a (C1-7) alkyl (meth)acrylate/(C8-40) linear or branched alkyl (meth)acrylate/polyolefin macromonomer), an ethylene/(C1-18) alkyl (meth)acrylate copolymer, an alkoxyalkyl (meth)acrylate/polybutylene copolymer macromonomer/(C1-32) linear or branched alkyl (meth)acrylate copolymer, polyisobutylene, a polyalkylstyrene, an ethylene/propylene copolymer, a styrene/maleic acid ester copolymer, and a styrene/isoprene hydrogenated copolymer.

(2) Detergent

Examples include basic, overbased, or neutral metal salts (e.g., overbased metal salts or alkaline earth metal salts of sulfonates such as petroleum sulfonates, alkylbenzene sulfonates, and alkylnaphthalene sulfonates), salicylates, phenates, naphthenates, carbonates, phosphonates, and mixtures of these.

(3) Dispersant

Examples include succinimides (bis- or mono-polybutenyl succinimides), Mannich condensates, and borates.

(4) Antioxidant

Examples include hindered phenols and aromatic secondary amines.

(5) Oiliness improver

Examples include long-chain fatty acids and their esters (e.g., oleic acid and oleate), long-chain amines and their amides (e.g., oleylamine and oleylamide).

(6) Metal-based friction and wear modifier

Examples include molybdenum-based compounds and zincbased compounds (e.g., molybdenum dithiophosphate, molybdenum dithiocarbamate, and zinc

dialkyldithiophosphates).

(7) Extreme pressure agent

Examples include sulfur compounds (mono- or disulfide, sulfoxide, and sulfur phosphide compounds), phosphide compounds, and chlorine compounds (e.g., chlorinated paraffin).

(8) Defoamer

Examples include silicone oils, metallic soap, fatty acid esters, and phosphate compounds.

(9) Demulsifier

Examples include quaternary ammonium salts (e.g., tetraalkyl ammonium salts), sulfonated oil, and phosphates

(e.g., phosphates of polyoxyethylene-containing nonionic surfactants) .

(10) Corrosion inhibitor

Examples include nitrogen-containing compounds (e.g., benzotriazole and 1,3,4-thiadiazolyl-2,5-bisdialkyldithiocarbamates).

(11) Pour point depressant

Examples include polyalkyl methacrylates, polyalkyl acrylates, polyalkyl styrenes, and polyvinyl acetate.

The lubricating oil composition of the present invention preferably contains at least one selected from the group consisting of a viscosity index improver, a detergent, a dispersant, an antioxidant, an oiliness improver, a metal-based friction and wear modifier, an extreme pressure agent, a defoamer, an anti-emulsifier, a corrosion inhibitor, and a pour point depressant. The lubricating oil composition may contain only one of these additives or may contain two or more additives if needed.

The amount of each of these additives is preferably 0.1 to 15% by weight based on the total amount of the lubricating oil composition. The total amount of the additives is preferably 0.1 to 30% by weight, more preferably 0.3 to 20% by weight, still more preferably 3 to 10% by weight based on the total amount of the lubricating oil composition.

The following matters are disclosed herein.

A disclosure (1) relates to a friction modifier containing a copolymer (A) that contains, as essential constituent monomers:

a monomer (a) represented by the following formula (1); and
a monomer (b) represented by the following formula (2),
the monomer (a) among copolymer (A)-constituting monomers having an average value of p per mole of the monomer (a) of 1 to 4,
the copolymer (A) having a weight average molecular weight of 5,000 to 38,000,
the copolymer (A) containing the monomer (a) in an amount of 10 to 60% by weight based on a total weight of the copolymer (A)-constituting monomers,
the formula (1) being as follows:

[Chem. 5]

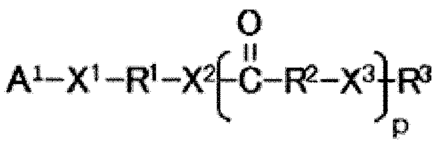

(1)

wherein $A^1$ is a polymerizable group; $-X^1-$, $-X^2-$, and $-X^3-$are each independently a group represented by -O- or -NH-; $R^1$ is a C1-C4 alkylene group; $R^2$ is a C2-C20 alkylene group; $R^3$ is a hydrogen atom; and p is an integer of 1 to 100, where when p is 2 or more, a plurality of $R^2$'s are the same as or different from each other and a plurality of $X^3$'s are the same as or different from each other,
the formula (2) being as follows:

[Chem. 6]

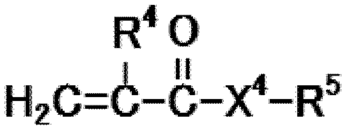

(2)

wherein $R^4$ is a hydrogen atom or a methyl group; $-X^4-$ is a group represented by -O- or -NH-; and $R^5$ is a linear or branched C5-C44 alkyl group.

A disclosure (2) relates to the friction modifier according to the disclosure (1), wherein a ratio (b/a) of a weight of the monomer (b) to a weight of the monomer (a) is 0.8 to 5.0 in the copolymer (A)-constituting monomers.

A disclosure (3) relates to a lubricating oil composition containing:

the friction modifier according to the disclosure (1) or (2); and
a base oil.

A disclosure (4) relates to the lubricating oil composition according to the disclosure (3), wherein the base oil has a kinematic viscosity at 100°C of 1 to 4 $mm^2/s$.

A disclosure (5) relates to the lubricating oil composition according to the disclosure (3) or (4), further containing at least one selected from the group consisting of a viscosity index improver, a detergent, a dispersant, an antioxidant, an oiliness improver, a metal-based friction and wear modifier, an extreme pressure agent, a defoamer, an anti-emulsifier, a corrosion inhibitor, and a pour point depressant.

EXAMPLES

The present invention is described in detail below with reference to examples, but the present invention is not limited to these examples.

<Production Example 1> (Production of Monomer (a-1))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 260.3 parts by weight (2.0 parts by mole) of 2-hydroxyethyl methacrylate (hereinafter abbreviated as HEMA), 684.8 parts by weight (6.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 100 mol%).

A monomer (a-1) is a monomer represented by the formula (1) in which $A^1$ is a methacryloyl group, $-X^1-$, $-X^2-$, and $-X^3-$ are groups represented by -O-, $R^1$ is an ethylene group, the molar average value of p is 3, $R^2$ is a pentylene group, and $R^3$ is a hydrogen atom. The monomer (a-1) has a SP value of 11.04.

<Production Example 2> (Production of Monomer (a-2))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 260.3 parts by weight (2.0 parts by mole) of 2-hydroxyethyl methacrylate (HEMA), 913.2 parts by weight (8.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 100 mol%).

A monomer (a-2) is a monomer represented by the formula (1) in which $A^1$ is a methacryloyl group, $-X^1-$, $-X^2-$, and $-X^3-$ are groups represented by -O-, $R^1$ is an ethylene group, the molar average value of p is 4, $R^2$ is a pentylene group, and $R^3$ is a hydrogen atom. The monomer (a-2) has a SP value of 10.87.

<Production Example 3> (Production of Monomer (a-3))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 260.3 parts by weight (2.0 parts by mole) of 2-hydroxyethyl methacrylate (HEMA), 228.3 parts by weight (2.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 53 mol%). Thereafter, 47 mol% of 2-hydroxyethyl methacrylate (HEMA) remaining as an impurity was removed by silica column chromatography.

A monomer (a-3) is a monomer represented by the formula (1) in which $A^1$ is a methacryloyl group, $-X^1-$, $-X^2-$, and $-X^3-$ are groups represented by -O-, $R^1$ is an ethylene group, the molar average value of p is 1.9, $R^2$ is a pentylene group, and $R^3$ is a hydrogen atom. The monomer (a-3) has a SP value of 11.36.

<Production Example 4> (Production of Monomer (a-4))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 232.2 parts by weight (2.0 parts by mole) of 2-hydroxyethyl acrylate (hereinafter abbreviated as HEA), 456.6 parts by weight (4.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 76 mol%). Thereafter, 24 mol% of 2-hydroxyethyl acrylate (HEA) remaining as an impurity was removed by silica column chromatography.

A monomer (a-4) is a monomer represented by the formula (1) in which $A^1$ is an acryloyl group, $-X^1-$, $-X^2-$, and $-X^3-$ are groups represented by -O-, $R^1$ is an ethylene group, the molar average value of p is 2.6, $R^2$ is a pentylene group, and $R^3$ is a hydrogen atom. The monomer (a-4) has a SP value of 11.30.

<Production Example 5> (Production of Monomer (a'-1))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 260.3 parts by weight (2.0 parts by mole) of 2-hydroxyethyl methacrylate (HEMA), 1141.5 parts by weight (10.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 100 mol%).

A monomer (a'-1) is a monomer represented by the formula (1) in which $A^1$ is a methacryloyl group, $-X^1-$, $-X^2-$, and $-X^3-$ are groups represented by -O-, $R^1$ is an ethylene group, the molar average value of p is 5, $R^2$ is a pentylene group, and $R^3$ is a hydrogen atom. The monomer (a'-1) has a SP value of 10.75.

<Production Example 6> (Production of Monomer (a'-2))

A mixture containing 60.6 parts by weight (10 parts by mole) of the monomer (a-2) obtained by the method described in Production Example 2, 9.1 parts by weight (10 parts by mole) of n-butanoic acid, and 350 parts by weight of dichloromethane was stirred at 0°C. Then, 6.3 parts by weight (5 parts by mole) of 4-dimethylaminopyridine and 24.0 parts by weight (15 parts by mole) of 1-ethyl-3-(3-dimethylaminopropyl)carbodiimide were added thereto, and the mixture was warmed to room temperature and stirred overnight in that state. The reaction liquid was washed with 1 N hydrochloric acid, an aqueous sodium hydrogen carbonate solution, and brine, and the organic layer was then dried over magnesium sulfate. The solvent was then removed and the product was further dried under vacuum to obtain a monomer (a'-2).

The monomer (a'-2) is a monomer represented by the formula (1) in which $A^1$ is a methacryloyl group, $-X^1-$, $-X^2-$, and $-X^3-$ are groups represented by -O-, $R^1$ is an ethylene group, the molar average value of p is 4, $R^2$ is a pentylene group, and $R^3$ is a butanoyl group. The monomer (a'-2) has a SP value of 9.96.

<Examples 1 to 21, Comparative Examples 1 to 5>

A reaction vessel equipped with a stirrer, a heating-cooling device, a thermometer, and a nitrogen inlet tube was charged with 185 parts by weight of ethyl acetate, a total of 100 parts by weight of a composition of the corresponding monomers shown in Tables 2 and 3, and dodecyl mercaptan and 2,2'-azobis(2-methylbutyronitrile) each as a chain transfer agent in the amounts shown in Tables 2 and 3. Then, the vessel was purged with nitrogen (gas phase oxygen concentration: 100 ppm) and sealed. The temperature was raised to 76°C with stirring, and a polymerization reaction was performed at the same temperature for six hours.

To the vessel was added 66.7 parts by weight of a mineral oil (SP value: 8.3 $(cal/cm^3)^{1/2}$, kinematic viscosity at 100°C: 2.4 $mm^2/s$, viscosity index: 96), and the temperature was raised to 120°C. Thereafter, unreacted monomers and ethyl acetate were removed at the same temperature under reduced pressure (0.027 to 0.040 MPa) over two hours. Thus, friction modifiers (A-1) to (A-21) of the present invention each containing 60% by weight of a copolymer and comparative friction modifiers (B-1) to (B-5) were obtained.

[Table 2]

| | | Friction modifier | SP value of structural unit | Example 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|---|
| | | | | A-1 | A-2 | A-3 | A-4 | A-5 | A-6 | A-7 | A-8 | A-9 | A-10 | A-11 | A-12 | A-13 | A-14 |
| Formulation of monomers (parts by weight) | Monomer (a) represented by formula (1) | (a-1) Adduct of HEMA with ε-caprolactone (3 mol) | 11.04 | 15 | 5 | 32 | 29 | 32 | 32 | 32 | 31.04 | 10.65 | 32 | 32 | - | - | 32 |
| | | (a-2) Adduct of HEMA with ε-caprolactone (4 mol) | 10.87 | - | - | - | - | - | - | - | - | - | - | - | 32 | 28 | - |
| | | (a-3) Adduct of HEMA with ε-caprolactone (1.9 mol) | 11.36 | 20 | - | - | - | - | - | - | - | - | - | - | - | - | - |
| | | (a-4) Adduct of HEA with ε-caprolactone (2.6 mol) | 11.30 | - | 10 | - | - | - | - | - | - | - | - | - | - | - | - |
| | | (a'-1) Adduct of HEMA with ε-caprolactone (5 mol) | 10.75 | - | - | - | - | - | - | - | - | - | - | - | - | - | - |
| | | (a'-2) Butyl-terminated ester of adduct of HEMA with ε-caprolactone (4 mol) | 9.96 | - | - | - | - | - | - | - | - | - | - | - | - | - | - |
| | Monomer (b) represented by formula (2) | (b-1) n-Dodecyl methacrylate | 9.02 | 5 | - | - | - | - | - | - | - | - | - | - | - | - | - |
| | | (b-2) Methacrylic acid ester of Neodol 23 | 8.99 | - | 30 | - | - | - | - | - | - | - | - | - | - | - | - |
| | | (b-3) n-Hexadecyl methacrylate | 8.93 | - | 21 | - | - | - | - | - | - | - | - | - | - | - | - |
| | | (b-4) n-Octadecyl methacrylate | 8.90 | - | 9 | - | - | - | - | - | - | - | - | - | - | - | - |
| | | (b-5) 2-Decyltetradecyl methacrylate | 8.77 | - | 7.5 | 68 | 61 | 10 | - | - | - | - | - | - | - | - | - |
| | | (b-6) 2-Dodecylhexadecyl methacrylate | 8.75 | 25 | 7.5 | - | - | 24 | 29 | 29 | 29 | 26 | 29 | 29 | 29 | 29 | 31.5 |
| | | (b-7) 2-Tetradecyloctadecyl methacrylate | 8.72 | 25 | - | - | - | 24 | 29 | 29 | 29 | 26 | 29 | 29 | 29 | 29 | 31.5 |
| | | (b-8) n-Dodecyl acrylate | 9.15 | - | - | - | - | - | - | - | - | - | - | - | - | - | - |
| | | (b-9) n-Octadecyl acrylate | 8.99 | - | - | - | - | - | - | - | - | - | - | - | - | - | - |
| | Monomer (c) | (c-1) Methyl methacrylate | 9.93 | - | - | - | - | - | 10 | - | - | - | - | - | - | - | - |
| | | (c-2) n-Butyl methacrylate | 9.45 | 10 | 10 | - | 10 | 10 | - | 10 | 10 | 37 | 10 | 10 | 10 | 14 | - |
| | Nitrogen-containing monomer (d) | (d-1) N,N-dimethylaminoethyl methacrylate | 9.52 | - | - | - | - | - | - | - | - | - | - | - | - | - | - |
| | Hydroxy group-containing monomer (e) | (e-1) 2-Hydroxyethyl acrylate | 14.48 | - | - | - | - | - | - | - | - | - | - | - | - | - | 5 |
| | | (e-2) 2-Hydroxyethyl methacrylate | 13.47 | - | - | - | - | - | - | - | 0.96 | 0.35 | - | - | - | - | - |
| | | (e-3) 2-Hydroxy-2-methylpropyl methacrylate | 12.08 | - | - | - | - | - | - | - | - | - | - | - | - | - | - |
| | Subtotal | | | 100 | 100 | 100 | 100 | 100 | 100 | 100 | 100 | 100 | 100 | 100 | 100 | 100 | 100 |
| Initiator, Chain transfer agent | Dodecyl mercaptan | | | 0.80 | 0.80 | 0.80 | 0.80 | 0.80 | 0.80 | 0.80 | 0.80 | 0.80 | 1.40 | 0.62 | 0.80 | 0.80 | 0.80 |
| | 2,2-Azobis(2-methylbutyronitrile) | | | 0.4 | 0.4 | 0.4 | 0.4 | 0.4 | 0.4 | 0.4 | 0.4 | 0.4 | 0.4 | 0.4 | 0.4 | 0.4 | 0.4 |
| Mw of copolymer (× $10^4$) | | | | 2.5 | 2.5 | 2.5 | 2.5 | 2.5 | 2.5 | 2.5 | 2.5 | 2.5 | 2.0 | 3.8 | 2.5 | 2.5 | 2.5 |
| Weight ratio (b/a) of monomers | | | | 1.6 | 5.0 | 2.1 | 2.1 | 1.8 | 1.8 | 1.8 | 1.9 | 4.9 | 1.8 | 1.8 | 1.8 | 2.1 | 2.0 |
| Length of side chain derived from monomer (a) (molar average) | | | | 19.0 | 22.1 | 24.0 | 24.0 | 24.0 | 24.0 | 24.0 | 24.0 | 24.0 | 24.0 | 24.0 | 31.0 | 31.0 | 24.0 |
| Length of side chain derived from monomer (b) (molar average) | | | | 16.1 | 14.9 | 14.0 | 14.0 | 16.4 | 16.9 | 16.9 | 16.9 | 16.9 | 16.9 | 16.9 | 16.9 | 16.9 | 16.9 |
| Ratio (a/b) of length of side chain derived from (a) to length of side chain derived from (b) | | | | 1.18 | 1.48 | 1.71 | 1.71 | 1.47 | 1.42 | 1.42 | 1.42 | 1.42 | 1.42 | 1.42 | 1.83 | 1.83 | 1.42 |
| SP value of copolymer | | | | 9.69 | 9.31 | 9.50 | 9.50 | 9.55 | 9.59 | 9.54 | 9.57 | 9.26 | 9.54 | 9.54 | 9.49 | 9.43 | 9.76 |
| Performance evaluation | Storage stability | | 25°C | ☆ | ☆ | ☆ | ☆ | ☆ | ☆ | ☆ | ☆ | ☆ | ☆ | ☆ | ☆ | ☆ | ☆ |
| Lubricating oil composition | | | | Example 22 | 23 | 24 | 25 | 26 | 27 | 28 | 29 | 30 | 31 | 32 | 33 | 34 | 35 |
| | | | | V-1 | V-2 | V-3 | V-4 | V-5 | V-6 | V-7 | V-8 | V-9 | V-10 | V-11 | V-12 | V-13 | V-14 |
| Performance evaluation | Kinematic viscosity with additive ($mm^2/s$) | | 100°C | 3.32 | 3.29 | 3.15 | 3.17 | 3.16 | 3.31 | 3.28 | 3.28 | 3.42 | 3.26 | 3.45 | 3.24 | 3.22 | 3.30 |
| | | | 40°C | 13.38 | 13.45 | 12.42 | 12.40 | 12.36 | 13.28 | 13.19 | 13.21 | 14.02 | 13.11 | 13.38 | 13.01 | 12.94 | 13.18 |
| | Viscosity index (VI) | | | 120 | 114 | 117 | 121 | 120 | 121 | 119 | 118 | 120 | 118 | 139 | 117 | 116 | 122 |
| | High-temperature stability | | 120°C | ○○ | ○○ | ○○ | ○○ | ○○ | ○○ | ○○ | ○○ | ○○ | ○○ | ○○ | ○○ | ○○ | ○○ |
| | MTM friction characteristics (immediately after start of sliding) | | 1000 mm/s | 0.026 | 0.026 | 0.022 | 0.024 | 0.023 | 0.023 | 0.024 | 0.024 | 0.027 | 0.024 | 0.025 | 0.024 | 0.026 | 0.025 |
| | | | 100 mm/s | 0.032 | 0.032 | 0.021 | 0.025 | 0.024 | 0.023 | 0.025 | 0.025 | 0.031 | 0.025 | 0.026 | 0.026 | 0.027 | 0.026 |
| | | | 10 mm/s | 0.034 | 0.034 | 0.014 | 0.019 | 0.018 | 0.019 | 0.020 | 0.020 | 0.033 | 0.020 | 0.021 | 0.020 | 0.022 | 0.022 |
| | MTM friction characteristics (after two hours of sliding) | | 1000 mm/s | 0.054 | 0.065 | 0.055 | 0.052 | 0.050 | 0.047 | 0.048 | 0.049 | 0.061 | 0.048 | 0.049 | 0.049 | 0.051 | 0.047 |
| | | | 100 mm/s | 0.049 | 0.063 | 0.052 | 0.049 | 0.045 | 0.041 | 0.042 | 0.043 | 0.058 | 0.042 | 0.041 | 0.043 | 0.044 | 0.042 |
| | | | 10 mm/s | 0.047 | 0.064 | 0.053 | 0.049 | 0.044 | 0.040 | 0.042 | 0.042 | 0.058 | 0.041 | 0.041 | 0.042 | 0.044 | 0.041 |

[Table 3]

| Friction modifier | | SP value of structural unit | Example 15 | 16 | 17 | 18 | 19 | 20 | 21 | Comparative Example 1 | 2 | 3 | 4 | 5 |
|---|---|---|---|---|---|---|---|---|---|---|---|---|---|---|
| | | | A-15 | A-16 | A-17 | A-18 | A-19 | A-20 | A-21 | B-1 | B-2 | B-3 | B-4 | B-5 |
| Formulation of monomers (parts by weight) Monomer (a) represented by formula (1) | (a-1) Adduct of HEMA with ε-caprolactone (3 mol) | 11.04 | 32 | 32 | 32 | 32 | 45 | - | - | - | - | - | - | 30 |
| | (a-2) Adduct of HEMA with ε-caprolactone (4 mol) | 10.87 | - | - | - | - | - | 15 | - | - | - | - | - | - |
| | (a-3) Adduct of HEMA with ε-caprolactone (1.9 mol) | 11.36 | - | - | - | - | - | - | 25 | 15 | 5 | - | - | 35 |
| | (a-4) Adduct of HEA with ε-caprolactone (2.6 mol) | 11.30 | - | - | - | - | - | 10 | - | - | - | 37.5 | - | - |
| | (a'-1) Adduct of HEMA with ε-caprolactone (5 mol) | 10.75 | - | - | - | - | - | - | - | - | - | - | 27 | - |
| | (a'-2) Butyl-terminated ester of adduct of HEMA with ε-caprolactone (4 mol) | 9.96 | - | - | - | - | - | - | - | - | 50 | - | - | - |
| Monomer (b) represented by formula (2) | (b-1) n-Dodecyl methacrylate | 9.02 | - | - | - | - | - | - | - | - | - | - | - | - |
| | (b-2) Methacrylic acid ester of Neodol 23 | 8.99 | - | - | - | - | - | - | - | 30 | 30 | - | - | 35 |
| | (b-3) n-Hexadecyl methacrylate | 8.93 | - | - | - | - | - | - | - | 21 | - | - | - | - |
| | (b-4) n-Octadecyl methacrylate | 8.90 | - | - | - | - | - | - | - | 9 | - | - | - | - |
| | (b-5) 2-Decyltetradecyl methacrylate | 8.77 | - | - | - | - | - | - | - | 5 | 15 | 30 | 73 | - |
| | (b-6) 2-Dodecylhexadecyl methacrylate | 8.75 | 31.5 | 31.5 | 31.5 | 29 | - | 30 | - | 5 | - | - | - | - |
| | (b-7) 2-Tetradecyloctadecyl methacrylate | 8.72 | 31.5 | 31.5 | 31.5 | 29 | 55 | 30 | 65 | - | - | 25 | - | - |
| | (b-8) n-Dodecyl acrylate | 9.15 | - | - | - | - | - | 5 | - | - | - | - | - | - |
| | (b-9) n-Octadecyl acrylate | 8.99 | - | - | - | - | - | 5 | - | - | - | - | - | - |
| Monomer (c) | (c-1) Methyl methacrylate | 9.93 | - | - | - | - | - | - | - | 5 | - | - | - | - |
| | (c-2) n-Butyl methacrylate | 9.45 | - | - | - | - | - | - | 10 | - | - | - | - | - |
| Nitrogen-containing monomer (d) | (d-1) N,N-dimethylaminoethyl methacrylate | 9.52 | - | - | 5 | 10 | - | - | - | - | - | - | - | - |
| Hydroxy group-containing monomer (e) | (e-1) 2-Hydroxyethyl acrylate | 14.48 | - | - | - | - | - | 5 | - | 10 | - | 7.5 | - | - |
| | (e-2) 2-Hydroxyethyl methacrylate | 13.47 | 5 | - | - | - | - | - | - | - | - | - | - | - |
| | (e-3) 2-Hydroxy-2-methylpropyl methacrylate | 12.08 | - | 5 | - | - | - | - | - | - | - | - | - | - |
| | Subtotal | | 100 | 100 | 100 | 100 | 100 | 100 | 100 | 100 | 100 | 100 | 100 | 100 |
| Initiator, Chain transfer agent | Dodecyl mercaptan | | 0.80 | 0.80 | 0.80 | 0.80 | 0.80 | 0.80 | 0.80 | 0.60 | 1.40 | 0.60 | 0.80 | 0.80 |
| | 2,2-Azobis(2-methylbutyronitrile) | | 0.4 | 0.4 | 0.4 | 0.4 | 0.4 | 0.4 | 0.4 | 0.4 | 0.4 | 0.4 | 0.4 | 0.4 |
| Mw of copolymer (× $10^4$) | | | 2.5 | 2.5 | 2.5 | 2.5 | 2.5 | 2.5 | 2.5 | 4.0 | 2.0 | 4.0 | 2.5 | 2.5 |
| Weight ratio (b/a) of monomers | | | 2.0 | 2.0 | 2.0 | 1.8 | 1.2 | 2.8 | 2.6 | 4.7 | 9.0 | 1.5 | 0.0 | 0.5 |
| Length of side chain derived from monomer (a) (molar average) | | | 24.0 | 24.0 | 24.0 | 24.0 | 24.0 | 26.3 | 16.3 | 16.3 | 32.0 | 21.2 | 38.0 | 19.3 |
| Length of side chain derived from monomer (b) (molar average) | | | 16.9 | 16.9 | 16.9 | 16.9 | 18.0 | 16.4 | 18.0 | 14.9 | 13.6 | 15.6 | 14.0 | 13.5 |
| Ratio (a/b) of length of side chain derived from (a) to length of side chain derived from (b) | | | 1.42 | 1.42 | 1.42 | 1.42 | 1.33 | 1.60 | 0.91 | 1.09 | 2.35 | 1.36 | 2.71 | 1.43 |
| SP value of copolymer | | | 9.71 | 9.64 | 9.51 | 9.55 | 9.76 | 9.63 | 9.45 | 9.90 | 9.56 | 10.13 | 9.30 | 10.43 |
| Performance evaluation | Storage stability | 25°C | ☆ | ☆ | ☆ | ☆ | ☆ | ☆ | ☆ | ☆ | × | ☆ | × | △ |
| | | | Example 36 | 37 | 38 | 39 | 40 | 41 | 42 | Comparative Example 6 | 7 | 8 | 9 | 10 |
| Lubricating oil composition | | | V-15 | V-16 | V-17 | V-18 | V-19 | V-20 | V-21 | W-1 | W-2 | W-3 | W-4 | W-5 |
| Performance evaluation | Kinematic viscosity with additive ($mm^2/s$) | 100°C | 3.29 | 3.27 | 3.30 | 3.20 | 3.31 | 3.32 | 3.32 | 3.25 | 3.32 | 3.14 | 3.37 | 3.14 |
| | | 40°C | 13.15 | 13.17 | 13.41 | 12.66 | 13.22 | 13.63 | 13.40 | 13.08 | 13.65 | 12.41 | 13.91 | 12.29 |
| | Viscosity index (VI) | | 121 | 118 | 117 | 119 | 122 | 119 | 120 | 117 | 114 | 116 | 116 | 119 |
| | High-temperature stability | 120°C | ○○ | ○○ | ○○ | ○○ | ○○ | ○○ | ○○ | △ | × | △ | △ | × |
| | MTM friction characteristics (immediately after start of sliding) | 1000 mm/s | 0.025 | 0.025 | 0.026 | 0.025 | 0.022 | 0.026 | 0.027 | 0.027 | 0.027 | 0.031 | 0.027 | 0.034 |
| | | 100 mm/s | 0.025 | 0.025 | 0.027 | 0.026 | 0.023 | 0.028 | 0.032 | 0.037 | 0.036 | 0.040 | 0.032 | 0.042 |
| | | 10 mm/s | 0.021 | 0.023 | 0.022 | 0.022 | 0.018 | 0.025 | 0.034 | 0.049 | 0.042 | 0.048 | 0.035 | 0.051 |
| | MTM friction characteristics (after two hours of sliding) | 1000 mm/s | 0.046 | 0.048 | 0.050 | 0.053 | 0.047 | 0.052 | 0.068 | 0.070 | 0.082 | 0.077 | 0.071 | 0.083 |
| | | 100 mm/s | 0.042 | 0.043 | 0.043 | 0.048 | 0.041 | 0.047 | 0.065 | 0.076 | 0.090 | 0.086 | 0.080 | 0.098 |
| | | 10 mm/s | 0.041 | 0.043 | 0.042 | 0.047 | 0.040 | 0.046 | 0.066 | 0.090 | 0.109 | 0.102 | 0.091 | 0.117 |

The monomers listed in Tables 2 and 3 are as follows.

(a'-1): adduct of HEMA with ε-caprolactone (5 mol)
(a'-2): butyl-terminated ester of adduct of HEMA with ε-caprolactone (4 mol)
(b-1): n-dodecyl methacrylate
(b-2): methacrylic acid ester of Neodol 23 (Shell Chemicals, a blend of C12 and C13 linear or branched alkyl alcohols (weight ratio = linear C12:branched C12:linear C13:branched C13 = 40:10:40:10))
(b-3): n-hexadecyl methacrylate
(b-4): n-octadecyl methacrylate
(b-5): 2-decyltetradecyl methacrylate
(b-6): 2-dodecylhexadecyl methacrylate
(b-7): 2-tetradecyloctadecyl methacrylate

(b-8): n-dodecyl acrylate
(b-9): n-octadecyl acrylate
(c-1): methyl methacrylate
(c-2): n-butyl methacrylate
(d-1): N,N-dimethylaminoethyl methacrylate
(e-1): 2-hydroxyethyl acrylate
(e-2): 2-hydroxyethyl methacrylate
(e-3): 2-hydroxy-2-methylpropyl methacrylate

<Mw of copolymer>

The weight average molecular weight (Mw) of each of the copolymers contained in the friction modifiers of Examples 1 to 21 and Comparative Examples 1 to 5 was measured under the conditions described in <Conditions for measuring Mw of copolymer (A)>.

<Weight ratio (b/a) of monomers>

The weight ratio of the monomer (b) to the monomer (a) in the copolymer (A)-constituting monomers was calculated based on the weights of the monomers (a-1) to (a-4) and the monomers (b-1) to (b-9).

<Length of side chain derived from monomer (a)>

The length of a side chain derived from the monomer (a) was calculated based on the molar ratios of the monomers (a-1) to (a-4) and the monomers (a'-1) and (a'-2) added and the length of a side chain of each monomer. Here, the monomers (a'-1) and (a'-2) are not encompassed in the monomer (a), but Table 3 shows the calculated values of the length of a side chain derived from the monomer (a) assuming that the monomers (a'-1) and (a'-2) are encompassed in the monomer (a).

<Length of side chain derived from monomer (b)>

The length of a side chain derived from the monomer (b) was calculated based on the molar ratios of the monomers (b-1) to (b-9) added and the lengths of a side chain of each monomer.

<Ratio of length of side chain derived from monomer (a) to length of side chain derived from monomer (b)>

The ratio of the length of a side chain derived from the monomer (a) to the length of a side chain derived from the monomer (b) was calculated by dividing the length of a side chain derived from the monomer (a) by the length of a side chain derived from the monomer (b).
The side chain lengths of the monomers (a-1) to (a-4), the monomers (a'-1) and (a'-2), and the monomers (b-1) to (b-9) are as described below.

(a-1): 24
(a-2): 31
(a-3): 16.3
(a-4): 21.2
(a'-1): 38
(a'-2): 35
(b-1): 12
(b-2): 13.5
(b-3): 16
(b-4): 18
(b-5): 14
(b-6): 16
(b-7): 18
(b-8): 12
(b-9): 18

<SP value of copolymer>

The SP value of each copolymer was calculated based on the weight fractions of the constituent monomers used in the production.

<Evaluation of storage stability of friction modifier>

The friction modifiers (A-1) to (A-21) and (B-1) to (B-5) obtained in Examples 1 to 21 and Comparative Examples 1 to 5 were stored in containers at 25°C, and the formation of precipitates was checked after 10 days, 20 days, 30 days, and 60 days. The storage stability was evaluated according to the following criteria.

(Evaluation criteria)

☆: No precipitate was formed even after 60 days had elapsed since the start of the test
◦◦: Precipitates were formed 60 days after the start of the test
◦: Precipitates were formed 30 days after the start of the test
△: Precipitates were formed 20 days after the start of the test
×: Precipitates were formed 10 days after the start of the test

<Examples 22 to 42 and Comparative Examples 6 to 10>

Any of the friction modifiers (A-1) to (A-21) obtained in Examples 1 to 21 and the friction modifiers (B-1) to (B-5) obtained in Comparative Examples 1 to 5 was added to a base oil 1, which is described below, in an amount of 2% by weight (the amount in terms of solid) relative to the weight of the base oil, in other words such that the amount of the copolymer (A) in the lubricating oil composition was 2% by weight. Thus, lubricating oil compositions (V-1) to (V-21) and (W-1) to (W-5) were obtained.

(1) Base oil 1: Mineral oil (SP value: 8.3 $(cal/cm^3)^{1/2}$, kinematic viscosity at 100°C: 3.1 $mm^2/s$, viscosity index: 107)

<Kinematic viscosity with additive>

The kinematic viscosities at 100°C and the kinematic viscosities at 40°C of the lubricating oil compositions (V-1) to (V-21) and (W-1) to (W-5) were measured by the method described in JIS-K 2283 (2000). The results are shown in Tables 2 and 3 as kinematic viscosities ($mm^2/s$) with additives.

<Viscosity index>

The viscosity indexes of the lubricating oil compositions (V-1) to (V-21) and (W-1) to (W-5) were measured by the method described in JIS-K 2283 (2000) and are shown in Tables 2 and 3.

<Evaluation of high-temperature stability of lubricating oil composition>

The lubricating oil compositions (V-1) to (V-21) and (W-1) to (W-5) were each placed in a vessel and stirred at 120°C. The time until solid matter precipitated was measured, and the high-temperature stability was evaluated according to the following criteria.

(Evaluation criteria)

◦◦: No solid matter precipitates even after five or more hours have elapsed since the start of the test
◦: Solid matter precipitates after two or more hours but within less than five hours from the start of the test
△: Solid matter precipitates after one or more hours but within less than two hours from the start of the test
×: Solid matter precipitates within less than one hour from the start of the test

<Evaluation of MTM friction characteristics>

The friction reducing effect of the lubricating oil compositions (V-1) to (V-21) and (W-1) to (W-5) was measured under the following conditions using a MTM (Mini Traction Machine) to obtain Stribeck curves. Tables 2 and 3 show, as MTM friction characteristics, the friction coefficients immediately after the start of sliding on the testing machine and after two hours of sliding on the testing machine at the speeds of 10 mm/s, 100 mm/s, and 1,000 mm/s. The lower the MTM friction characteristics, the higher the friction reducing effect.

<Evaluation of friction>

Apparatus: MTM-2 available from PCS Instruments
Disc: MTM polished disc (standard) (0.01 micron)
Ball: Drilled 3/4 AISI 52100 precision steel ball
Speed: 10 mm/s to 3,000 mm/s
Temperature: 100°C
Sliding/rolling ratio: 50%
Load: 30 N

The results in Tables 2 and 3 demonstrate that the friction modifiers of the present invention (Examples 1 to 21) form no precipitate even when stored at 25°C for 30 days or more, and thus have excellent storage stability. The results also demonstrate that the lubricating oil compositions (Examples 22 to 42) containing the friction modifiers of the present invention form no precipitate even when stored at 120°C for two hours or more, and thus have excellent high-temperature stability. The lubricating oil compositions having excellent high-temperature stability exhibit a high friction reducing effect not only immediately after the start of sliding, but also after two hours of sliding.

INDUSTRIAL APPLICABILITY

The lubricating oil compositions containing the friction modifiers of the present invention are suitable as drive system lubricating oils (MTFs, differential gear oils, ATFs, belt-CVTFs, etc.), hydraulic oils (machine hydraulic oil, power steering oil, shock absorber oil, etc.), engine oils (gasoline and diesel, etc.), and traction oils. Preferably, the lubricating oil compositions are useful as transmission oils, electric motor oils, or multi-purpose oils for both transmissions and electric motors in electric vehicles or hybrid vehicles, and particularly preferably, they are useful as multi-purpose oils for both transmissions and electric motors in electric vehicles or hybrid vehicles.

## Claims

**1.** A friction modifier comprising a copolymer (A) that comprises, as essential constituent monomers:

a monomer (a) represented by the following formula (1); and
a monomer (b) represented by the following formula (2),
the monomer (a) among copolymer (A)-constituting monomers having an average value of p per mole of the monomer (a) of 1 to 4,
the copolymer (A) having a weight average molecular weight of 5,000 to 38,000,
the copolymer (A) containing the monomer (a) in an amount of 10 to 60% by weight based on a total weight of the copolymer (A)-constituting monomers,
the formula (1) being as follows:

[Chem. 1]

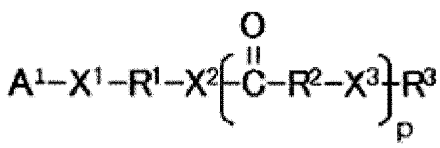

(1)

wherein $A^1$ is a polymerizable group; $-X^1-$, $-X^2-$, and $-X^3-$are each independently a group represented by -O- or -NH-; $R^1$ is a C1-C4 alkylene group; $R^2$ is a C2-C20 alkylene group; $R^3$ is a hydrogen atom; and p is an integer of 1 to 100, where when p is 2 or more, a plurality of $R^2$'s are the same as or different from each other and a plurality of $X^3$'s are the same as or different from each other,
the formula (2) being as follows:

[Chem. 2]

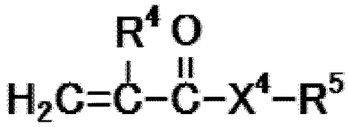

(2)

wherein $R^4$ is a hydrogen atom or a methyl group; $-X^4-$ is a group represented by -O- or -NH-; and $R^5$ is a linear or branched C5-C44 alkyl group.

**2.** The friction modifier according to claim 1,
wherein a ratio (b/a) of a weight of the monomer (b) to a weight of the monomer (a) is 0.8 to 5.0 in the copolymer (A)-constituting monomers.

**3.** A lubricating oil composition comprising:

the friction modifier according to claim 1 or 2; and
a base oil.

**4.** The lubricating oil composition according to claim 3,
wherein the base oil has a kinematic viscosity at 100°C of 1 to 4 $mm^2/s$.

**5.** The lubricating oil composition according to claim 3, further comprising at least one selected from the group consisting of a viscosity index improver, a detergent, a dispersant, an antioxidant, an oiliness improver, a metal-based friction and wear modifier, an extreme pressure agent, a defoamer, an anti-emulsifier, a corrosion inhibitor, and a pour point depressant.

## INTERNATIONAL SEARCH REPORT

International application No.
**PCT/JP2023/041950**

**A. CLASSIFICATION OF SUBJECT MATTER**

***C10M 145/14***(2006.01)i; ***C10M 149/04***(2006.01)i; ***C10M 149/06***(2006.01)i; *C10N 20/02*(2006.01)n; *C10N 20/04*(2006.01)n; *C10N 30/00*(2006.01)n; *C10N 30/06*(2006.01)n; *C10N 30/08*(2006.01)n; *C10N 40/00*(2006.01)n; *C10N 40/04*(2006.01)n; *C10N 40/06*(2006.01)n; *C10N 40/08*(2006.01)n; *C10N 40/25*(2006.01)n

FI: C10M145/14; C10M149/04; C10M149/06; C10N40:08; C10N40:25; C10N40:00 D; C10N40:06; C10N30:08; C10N40:04; C10N20:04; C10N20:02; C10N30:00 Z; C10N30:06

According to International Patent Classification (IPC) or to both national classification and IPC

**B. FIELDS SEARCHED**

Minimum documentation searched (classification system followed by classification symbols)

C10M101/00-177/00; C10N20/02; C10N20/04; C10N30/00; C10N30/06; C10N30/08; C10N40/00; C10N40/04; C10N40/06; C10N40/08; C10N40/25

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-172984 A (SANYO CHEMICAL IND LTD) 10 October 2019 (2019-10-10) claims 1, 6, paragraphs [0011], [0081]-[0097], tables 1, 3, examples 6, 20 | 1-3, 5 |
| Y | claims 1, 6, paragraphs [0011], [0081]-[0097], tables 1, 3, examples 6, 20 | 4 |
| Y | JP 2022-151618 A (SANYO CHEMICAL IND LTD) 07 October 2022 (2022-10-07) claim 1, paragraphs [0006], [0090], [0122], examples | 4 |
| Y | JP 2021-25007 A (EMG LUBRICANTS GK) 22 February 2021 (2021-02-22) claim 1, paragraphs [0005], [0015], [0122], examples | 4 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 January 2024** | **06 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/041950**

| Patent document cited in search report | Publication date (day/month/year) | Patent family member(s) | Publication date (day/month/year) |
|---|---|---|---|
| JP 2019-172984 A | 10 October 2019 | (Family: none) | |
| JP 2022-151618 A | 07 October 2022 | (Family: none) | |
| JP 2021-25007 A | 22 February 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3730660 B
- JP 5822706 B
- JP 5684832 B
- JP 4686444 B
- JP 2022151618 A
- JP 6582021 B

### Non-patent literature cited in the description

- *Polymer Engineering and Science*, February 1974, vol. 14 (2), 147-154